# EUROPEAN PATENT APPLICATION

(11) **EP 2 487 364 A2**
(43) Date of publication of application: **15.08.2012**
(21) Application number: 12153714.6
(22) Date of filing: 02.02.2012
(51) Int. Cl.: F03D 1/00, B63B 35/00

(54) **Vessel and method for mounting an offshore wind turbine**

(30) Priority: 09.02.2011 US 201113023567
(71) Applicant: General Electric Company, Schenectady, New York 12345 (US)
(72) Inventor: Van der Bos, Roelant, 22297 Hamburg (DE)
(74) Representative: Bedford, Grant Richard

(57) **Abstract**

A method for erecting an offshore wind turbine 10 at a wind turbine erection site is provided, wherein the wind turbine 10 includes a rotor 18, which has, in a fully assembled condition, a predetermined number of rotor blades 22 mounted to a rotor hub 20. The method comprises transporting the rotor hub 20 to the erection site; transporting rotor blades 22 to the erection site; mounting, on a vessel, rotor blades 22 to the rotor hub 20 so that the rotor 18 is in the fully assembled condition. Further, a vessel 120 having a flange for mounting a rotor hub 20 is provided.

## Description

The subject matter described herein relates generally to methods and systems for the mounting of wind turbines, and more particularly, to vessels and systems for mounting offshore wind turbines.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

In the past, wind turbines have often been installed onshore allowing for well-known construction methods and also easy accessibility and maintenance. However, availability of onshore sites becomes rare in some countries. Furthermore, environmental impact of onshore wind turbines on residents living near the turbine site impose, e.g., size limitations onto onshore turbines. For these and other reasons, offshore wind turbine sites, i.e. sites which are located in a body of water, are attracting more and more interest in recent years. However, offshore wind turbines encounter specific challenges not experienced with onshore wind turbines that pose technical and logistical problems still to be solved. This applies for instance to the transport of the wind turbine, respectively its components, to the erection site, and to the assembly or erection process itself.

A crucial factor during erection of offshore wind turbines is the time needed for mounting the turbine at the site. As the weather conditions at sea change rapidly and often do not allow a safe mounting, quick erection of the turbine is both crucial for keeping to schedules and to spare cost for the equipment involved.

In view of the above, it is desirable to have a method and system for mounting offshore wind turbines which allows for an improved mounting process.

In one aspect according to the present invention, a method for erecting an offshore wind turbine at a wind turbine erection site is provided, wherein the wind turbine includes a rotor, which has, in a fully assembled condition, a predetermined number of rotor blades mounted to a rotor hub. The method comprises transporting the rotor hub to the erection site; transporting rotor blades to the erection site; mounting, on a vessel, rotor blades to the rotor hub so that the rotor is in the fully assembled condition; erecting a wind turbine tower at the wind turbine erection site; mounting a nacelle to the top of the tower; lifting the fully assembled rotor to its position at the tower; and, mounting the fully assembled rotor to the nacelle.

In another aspect, a method for erecting an offshore wind turbine at a wind turbine erection site is provided, wherein the wind turbine includes a rotor, which has, in a fully assembled condition, a predetermined number of rotor blades mounted to a rotor hub. The method comprises transporting the rotor to the erection site, which has a smaller number than the predetermined number of rotor blades mounted to the rotor hub; transporting rotor blades to the erection site; mounting, on a vessel, the rotor by assembling rotor blades to the rotor hub so that the rotor is in the fully assembled condition; erecting a wind turbine tower at the wind turbine erection site; mounting a nacelle to the top of the tower; lifting the fully assembled rotor to its position at the tower; and, mounting the rotor to the nacelle.

In yet another aspect, a vessel is provided. The vessel comprises a vessel deck, and space for mounting a wind turbine rotor on the deck.

Various aspects, advantages and features of the present invention are apparent from the dependent claims, the description and the accompanying drawings, in which:
Fig. 1 is a perspective view of an exemplary wind turbine.
Fig. 2 is an enlarged sectional view of a portion of the wind turbine shown in Fig. 1.
Fig. 3 is a perspective view of a vessel for transporting parts of a wind turbine.
Fig. 4 to 6 are perspective views of the process of erecting a wind turbine tower.
Fig. 7 is a top view of a vessel for transporting a wind turbine rotor according to embodiments.
Fig. 8 is a top view of a vessel for transporting a wind turbine rotor according to further embodiments.
Fig. 9 is a top view of a vessel for transporting a wind turbine rotor according to yet further embodiments.
Figs. 10 to 12 are top views on the process of mounting a wind turbine rotor according to embodiments.
Fig. 13 is a top view on the process of mounting a wind turbine rotor to a nacelle according to further embodiments.
Fig. 14 is a side view on a vessel, on which a wind turbine rotor is mounted according to embodiments.
Fig. 15 is a top view on the process of mounting a wind turbine rotor to a nacelle according to yet further embodiments.
Fig. 16 is a side view on a vessel, on which a wind turbine rotor is mounted according to Fig. 15.
Fig. 17 is a side view on the process of turning a rotor according to embodiments.

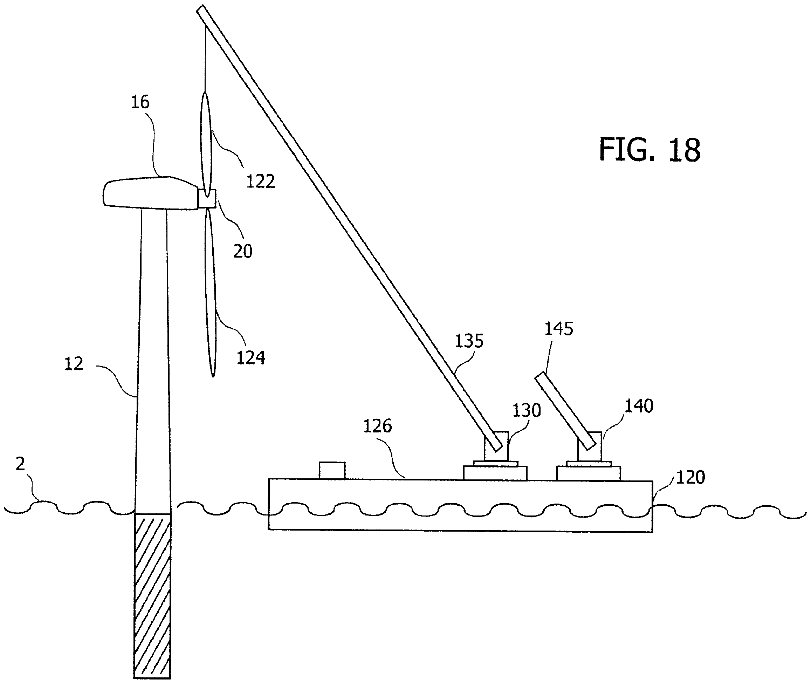

Fig. 18 is a side view on the process of mounting a wind turbine according to embodiments.
Fig. 19 is a flow chart of a method according to embodiments.
Fig. 20 is a flow chart of a method according to further embodiments.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include a system and method allowing for improved erection of offshore wind turbines.

As used herein, the term "vessel" is intended to be representative of any floating device suitable for transportation of wind turbine components. As used herein, a "vessel" may also be temporarily connected to, respectively supported by the seabed, as is for instance known from the field of oil rigs. As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

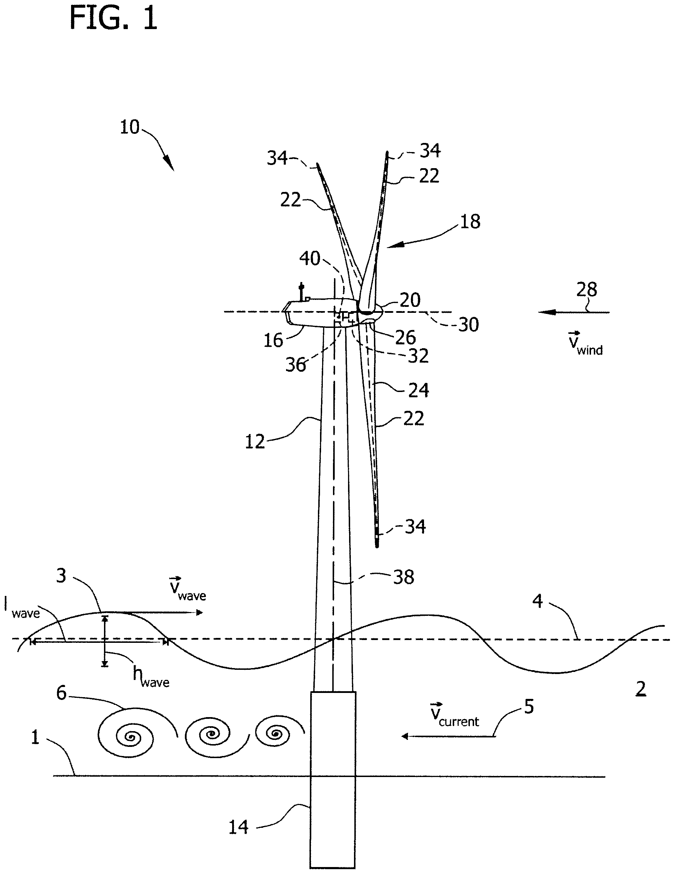

Fig. 1 is a perspective view of an exemplary offshore wind turbine 10. In the exemplary embodiment, offshore wind turbine 10 is a horizontal-axis wind turbine. Alternatively, offshore wind turbine 10 may be a vertical-axis wind turbine. In the exemplary embodiment, offshore wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other nonlimiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position. Wind turbine 10 may be an upwind turbine or a downwind turbine, depending on the position of the rotor with respect to the nacelle 16.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, offshore wind turbine 10 is mounted in a body of water 2, e.g. in a lake or in the sea. The body of water 2 has a ground 1, e.g. e lakebed or a seabed, which typically comprises sand and/or gravel. In the exemplary embodiment, support system 14 is a monopole structure anchored in ground 1. In alternative embodiments, support system 14 may include a tripod structure and/or a lattice structure fixed to ground 1. In a still alternative embodiment, support structure 14 may include a buoyant platform on which tower 12 is mounted. Support structure 14 will be designed such that it provides sufficient support to tower 12, nacelle 16 and rotor 18. In the exemplary embodiment, tower 12 is fabricated from tubular steel to define a cavity (not shown in Figure 1) between support system 14 and nacelle 16. In an alternative embodiment, tower 12 is any suitable type of tower having any suitable height, for instance, the tower may include several sections in a vertical direction, which are mounted to each other to form tower 12.

The body of water 2 has an average water level 4 which may vary with time due to tidal variations in some embodiments. In addition to the tidal variations of the water level, water waves 3 will form at the surface of the body 2 as a result of wind 28 interacting with the water surface. In this context, it is worth noting that the direction vwave of the water waves is not necessarily the same as the direction vwind of the wind. For example, due to the topology of ground 1 the direction of the waves 3 may even be opposite to the direction of the wind (as exemplary illustrated in Fig. 1). The correlation between wind speed direction vwind and wave speed direction vwave will therefore depend on the specific circumstances of the erection site of the offshore wind turbine 10. In addition, there may exist currents 5 which may or may not vary with time. For example, current 5 may be formed due to the topology of ground 1 and is dependent on the specific circumstances of the erection site.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

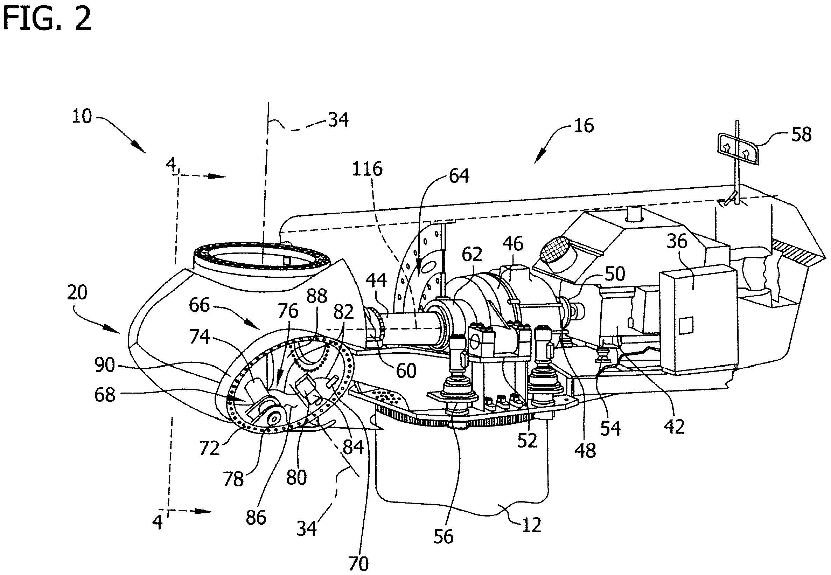

Fig. 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 116. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, hub 20 includes a pitch assembly 66. Pitch assembly 66 includes one or more pitch drive systems 68 and at least one sensor 70. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

In the exemplary embodiment, pitch assembly 66 includes at least one pitch bearing 72 coupled to hub 20 and to respective rotor blade 22 (shown in Figure 1) for rotating respective rotor blade 22 about pitch axis 34. Pitch drive system 68 includes a pitch drive motor 74, pitch drive gearbox 76, and pitch drive pinion 78. Pitch drive motor 74 is coupled to pitch drive gearbox 76 such that pitch drive motor 74 imparts mechanical force to pitch drive gearbox 76. Pitch drive gearbox 76 is coupled to pitch drive pinion 78 such that pitch drive pinion 78 is rotated by pitch drive gearbox 76. Pitch bearing 72 is coupled to pitch drive pinion 78 such that the rotation of pitch drive pinion 78 causes rotation of pitch bearing 72. More specifically, in the exemplary embodiment, pitch drive pinion 78 is coupled to pitch bearing 72 such that rotation of pitch drive gearbox 76 rotates pitch bearing 72 and rotor blade 22 about pitch axis 34 to change the blade pitch of blade 22.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

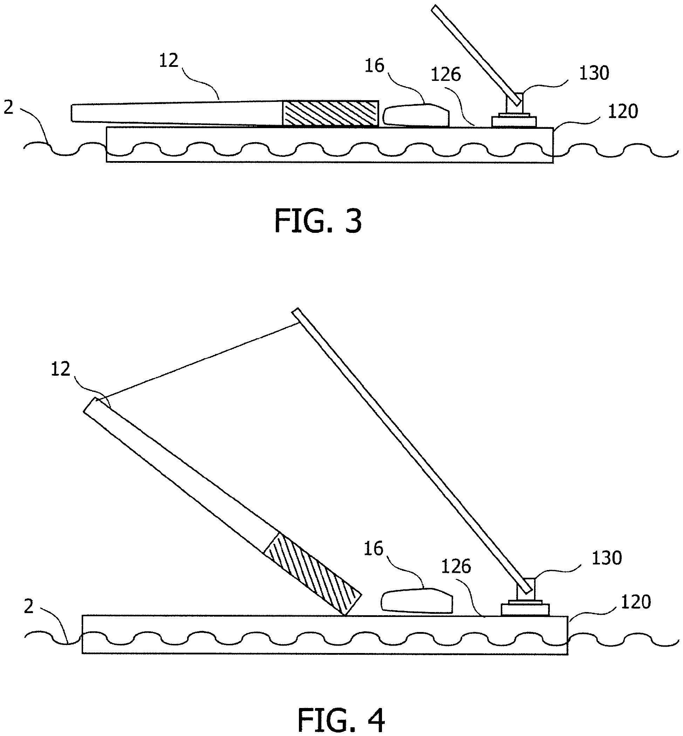

Fig. 3 shows a vessel 120 on which a tower 12 of a wind turbine is transported on a body of water 2. Also transported on the deck of the vessel is the nacelle 16. Once at the site, the crane 130 on deck of the vessel serves to lift tower 12, as shown in Fig. 4. In embodiments, the crane or cranes may be located on further vessels or ships, for instance on dedicated crane ships.

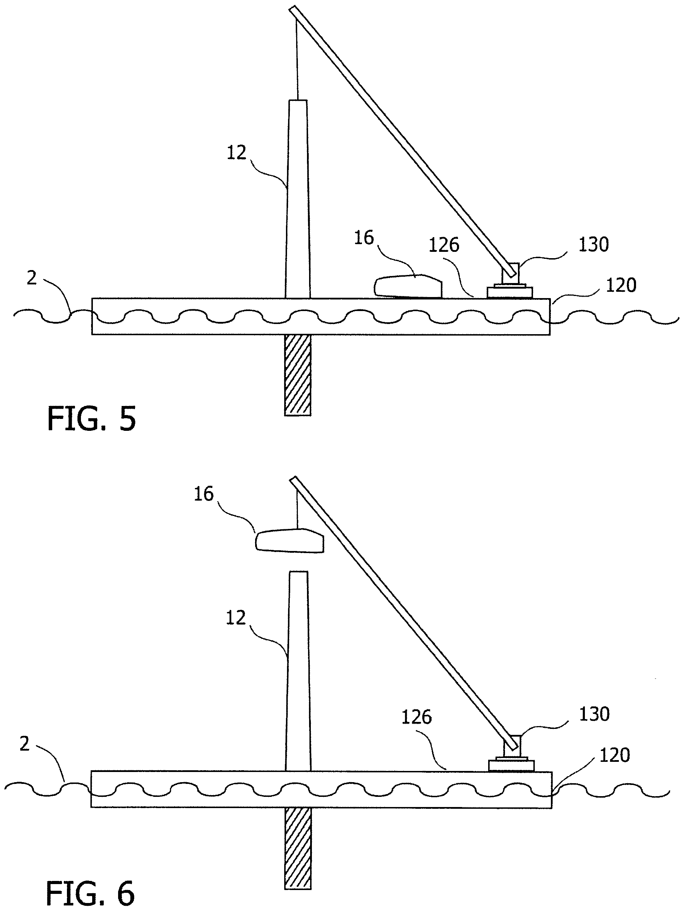

Fig. 5 shows how the tower 12 is lowered into the water 2. The tower is then typically fixed to the ground respectively to the sea bed (not shown). After the tower is stably positioned, nacelle 16 is lifted by crane 130 on top of the tower and subsequently mounted thereto, as shown in Fig. 6.

According to embodiments, the erection of the tower 12 with nacelle 16 is typically carried out only after, or at the same time, that the rotor is fully assembled on the deck 126 of vessel 120, which is further described below. In other embodiments, the erection of the tower and nacelle is carried out in a different timely manner with respect to the rotor mounting, i.e., before it.

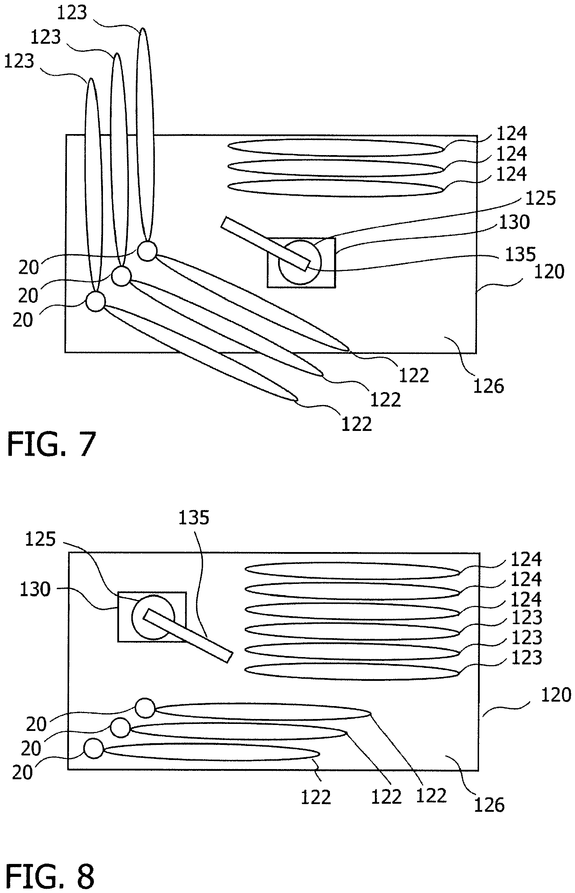

Fig. 7 shows a top view of a vessel 120 according to embodiments, with three partly mounted rotors each including a hub 20 and two rotor blades 122, 123 mounted to the hub. The third rotor blade 124 for each rotor is placed separately on deck 126. The third rotor blade is mounted to the already pre-mounted combination of hub 20 and blades 122, 123 after the transportation vessel has arrived at the erection site of the wind turbine, or in embodiments, already during the sea transport to the erection site. A crane 130 on deck serves for holding hub 20 during subsequent mounting of the third rotor blade 124, and for lifting the completed rotor to its position at the top of tower 12 with mounted nacelle 16. Crane 130 includes a turnable base 125 and a crane arm 135. Crane 130 may also be provided on a vessel different from the transportation vessel 120.

Fig. 8 shows a top view of a vessel 120 according to embodiments. Each hub 20 is pre-mounted to only one rotor blade 122. The two additional rotor blades 123, 124 needed to completely mount each rotor are transported laying side by side on the deck 126 of the vessel 120. For mounting a rotor, two rotor blades 123, 124 are mounted to each pre-mounted hub-rotor-blade-assembly. In embodiments, rotor blades 123, 124 may also be stored differently, e.g. in shelfs.

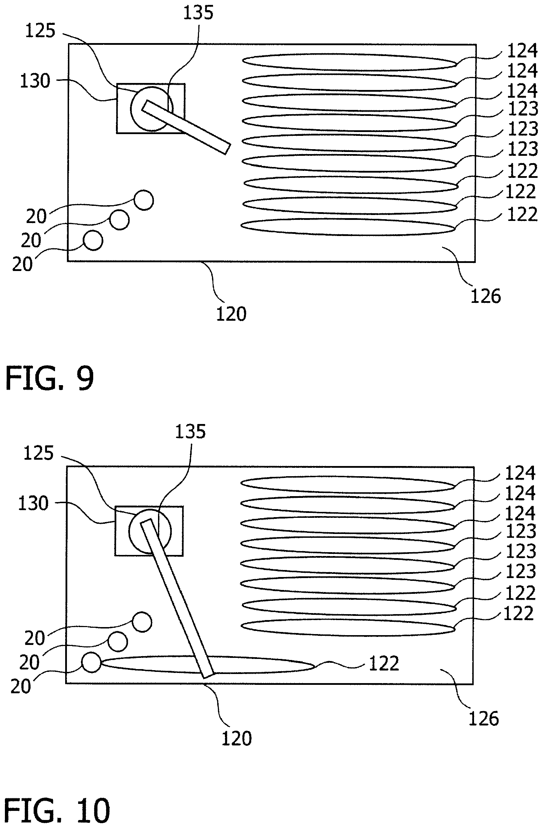

Fig. 9 shows a top view of a vessel 120 according to embodiments. Therein, the hubs 20 and the rotor blades 122, 123, 124 are transported separated from hubs 20, i.e., the hubs are not mounted to any rotor blade, or, in other terms, the rotors are not pre-mounted as shown in Figs. 7 and 8. The hubs 20 may be mounted to the deck 126 of vessel 120 by at least one flange (not shown), in order to ease subsequent mounting of the rotor blades 122, 123, 124. If the hub is not mounted to deck 126 during transport, it may be mounted thereto during the subsequent mounting of the blades to the hub. In this case, each rotor blade 122, 123, 124 may subsequently be mounted to the hub 20 without further securing the already mounted hub-rotor-blade combination against tilting, e.g., by a second crane.

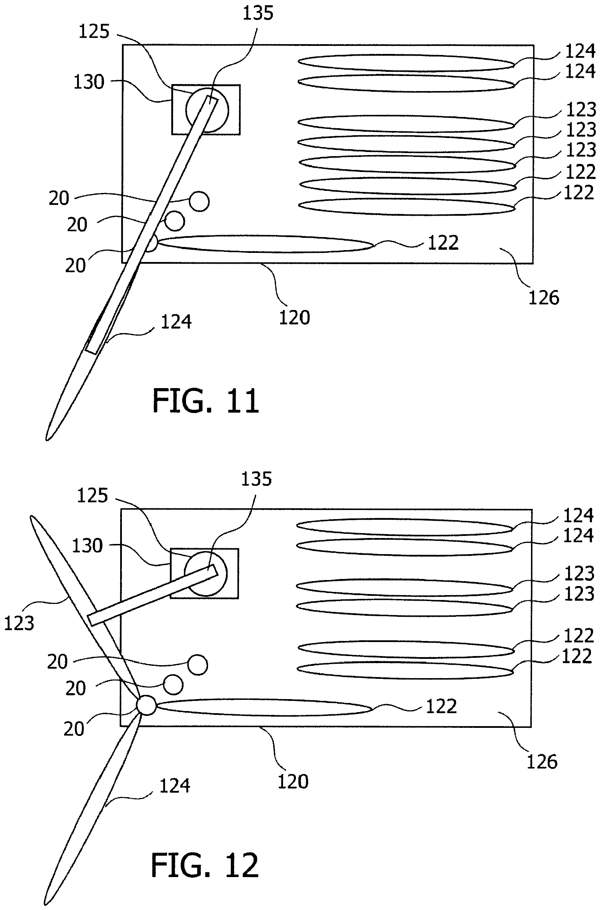

Fig. 10 shows how a rotor blade 122 is lifted from its transport position on deck, and supported by crane 130 to be mounted to a hub 20. Fig. 11 shows how a further rotor blade 124 is mounted to hub 20, while being supported by crane 130. In Fig. 12, the third rotor blade 123 is supported by crane 130 while being mounted to the hub 20, which has been previously equipped with two rotor blades 122, 124. Thus, Fig. 10 shows how the rotor is being completed, or in other terms, how the rotor reaches its fully assembled state.

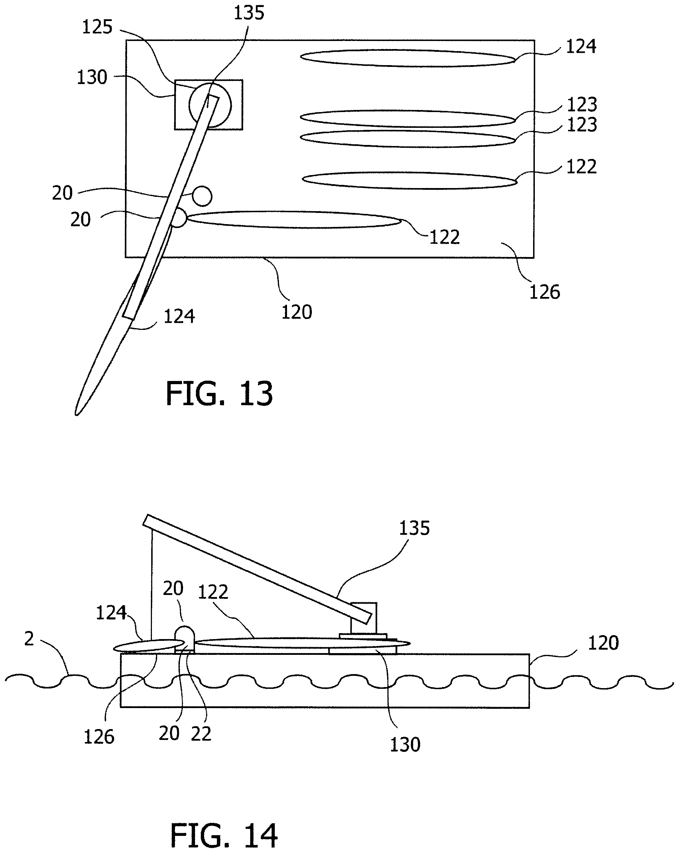

After a first rotor has been completed as shown in Fig 11, it is lifted by a crane from the vessel and mounted to the wind turbine tower, which is described further below. The crane employed for lifting the completed rotor needs not necessarily be crane 130, but may be a second crane (not shown), which may also be located on another vessel. Fig. 13 shows exemplarily how a further, or second hub 20 is being mounted to rotor blades, wherein one rotor blade 122 has already been mounted thereto, and a second rotor blade 124 is just being mounted while being supported by crane 130.

Fig. 14 shows a side view on the mounting process of a rotor blade 124 to hub 20, to which another rotor blade 122 is already mounted, similar to Fig. 11. For illustrational purposes, the positon of crane 130 is different from that shown in Figs. 9 to 13.

Further, no other hubs or rotor blades on the deck 126 of the vessel 120 are shown, which is also due to illustrational purposes. Fig. 14 further shows a flange 22 on deck 126 of vessel 120. The hub 20 is fixed or mounted to the flange 22 during the mounting process of the rotor blades 122, 123, 124. This ensures that the hub 20 is not tilted by the weight force of the already mounted rotor blades, as long as the rotor is not fully assembled, which would be highly undesirable. In embodiments, the hub may also not be mounted to the deck. However, in this case the already mounted rotor blades have to be supported either by a crane or by support elements, which will hinder the hub-rotor-blade combination from tilting under the weight of the already mounted rotor blades during the mounting process. This is shown below.

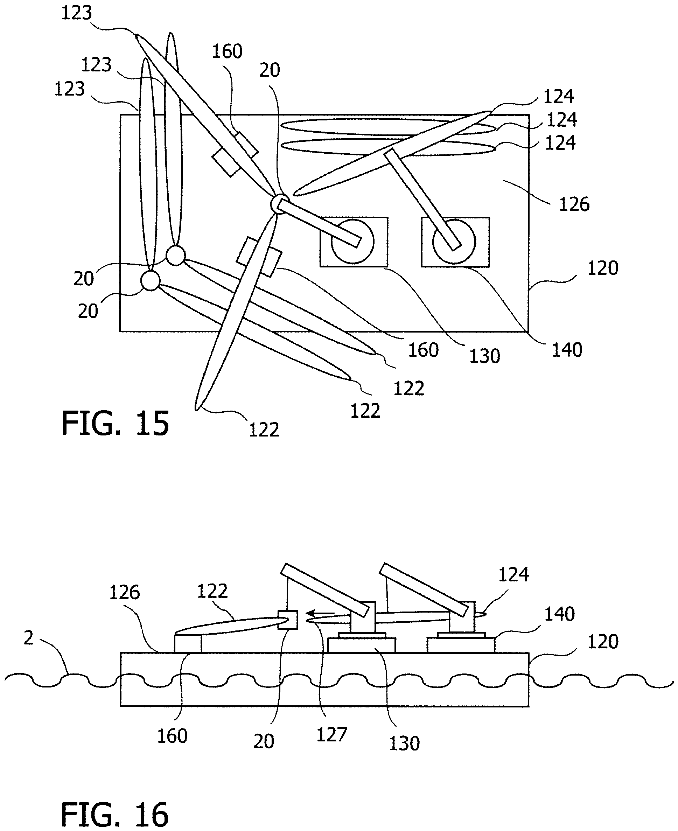

Fig. 15 shows how a rotor blade 124 is mounted to hub 20, to which two rotor blades 122, 123 are pre-mounted, according to embodiments. Hub 20 is lifted by a first crane 130. In order to maintain a stable horizontal position of the rotor blades 122, 123, they may be supported by supports 160, which may comprise wood, metal, fibre compounds, polymers, or combinations thereof. Rotor blade 124 is lifted by a second crane 140. As crane 140 only has to lift the weight of one rotor blade 124, it can be significantly smaller than crane 130. Rotor blade 124 is positioned by crane 140 such that its root portion 127 can be mounted to hub 20.

Fig. 16 shows a side view of an embodiment similar to Fig. 15. As in Fig. 14, other components apart from the hub and rotor blades currently mounted are not shown for illustrational purposes.

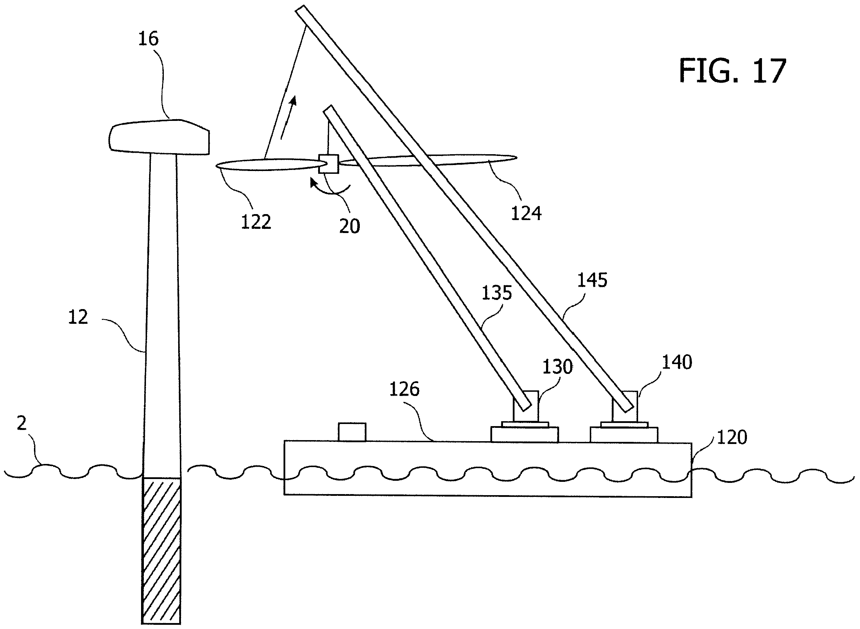

Fig. 17 shows how the mounted rotor, which was completely mounted on the deck of vessel 120, is lifted to its position on the nacelle 16 by cranes 130, 140. As the rotor was mounted on deck 126 of the vessel 120 previously, the rotor blades have a horizontal orientation when lifted from the deck by crane 130. Accordingly, the rotor has to be tilted or turned by 90° before it can be mounted to the nacelle 16. To this end, the second crane 140 can be used to pull on rotor blade 122 as shown, in order to direct the rotor in a vertical direction. Usually, the rotation or tilting of the rotor is done near the sea level (or level of deck 126), so that there are less requirements on the second crane in terms of lifting height. Once this is achieved, the rotor, respectively the hub, is positioned at the nacelle 16 and mounted thereto. This is shown in Fig. 12. Therein, crane arm 145 has already been reduced to its minimum length. Hub 20 is fixed to the nacelle 16, and subsequently the wind turbine is completely erected, respectively mounted. In embodiments, it is also possible to lift the rotor using only one crane. This can either be facilitated by having a special support structure on the vessel that supports the rotor along the span of one of the blades while being rotated. A further option is using a second hook on the main crane, which supports the rotor on the other side of the center of gravity until the rotor is vertical.

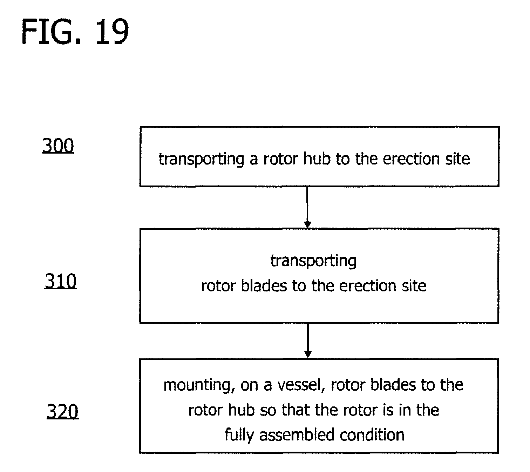

Fig. 19 shows a flow chart of a method for erecting an offshore wind turbine at a wind turbine erection site, wherein the wind turbine includes a rotor, which has, in a fully assembled condition, a predetermined number of rotor blades mounted to a rotor hub, according to embodiments. The method includes transporting a hub of the rotor to the erection site in step 300, and transporting rotor blades to the erection site in step 310. The rotor blades are then mounted, on a vessel, to the rotor hub so that the rotor is in the fully assembled condition in step 320.

According to various embodiments, a wind turbine tower is erected at the wind turbine erection site in a step 330. The nacelle is positioned and mounted to the top of the tower in step 340. Then, the fully assembled rotor is lifted to its position at the tower, respectively at the nacelle, in step 350. The fully assembled rotor is mounted to the nacelle in step 360.

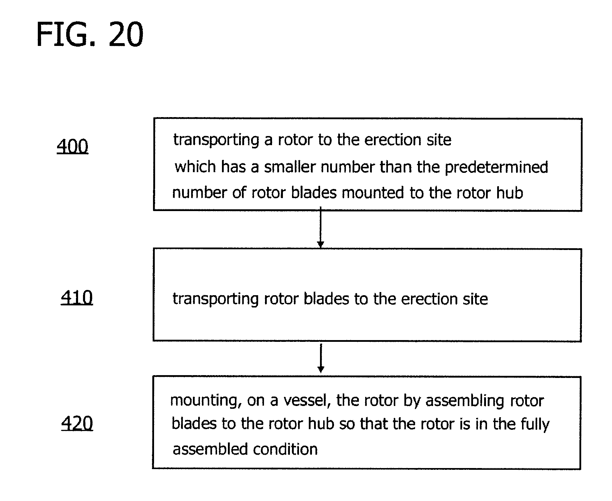

Fig. 20 shows a further flow chart of a method for erecting an offshore wind turbine at a wind turbine erection site, wherein the wind turbine includes a rotor, which has, in a fully assembled condition, a predetermined number of rotor blades mounted to a rotor hub, according to embodiments. The rotor is transported to the erection site, wherein the rotor has a smaller number than the predetermined number of rotor blades mounted to the rotor hub, in step 400. Rotor blades are transported to the erection site in step 410. The rotor is then mounted, on a vessel, by assembling rotor blades to the rotor hub so that the rotor is in the fully assembled condition, in step 420.

According to certain embodiments, the method further includes erecting a wind turbine tower at the wind turbine erection site in a step 430. The nacelle is positioned and mounted to the top of the tower in step 440. Then, the fully assembled rotor is lifted to its position at the tower, respectively at the nacelle, in step 450. The fully assembled rotor is mounted to the nacelle in step 460.

The above-described systems and methods may facilitate an improved erection process for an offshore wind turbine.

Exemplary embodiments of systems and methods for erecting offshore wind turbines are described above in detail. The systems and methods are not limited to the specific embodiments described herein, but rather, components of the systems and/or steps of the methods may be utilized independently and separately from other components and/or steps described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for erecting an offshore wind turbine at a wind turbine erection site, wherein the wind turbine includes a rotor, which has, in a fully assembled condition, a predetermined number of rotor blades mounted to a rotor hub, the method comprising:
   a) transporting the rotor hub to the erection site;
   b) transporting rotor blades to the erection site; and,
   c) mounting, on a vessel, rotor blades to the rotor hub so that the rotor is in the fully assembled condition.
2. The method of clause, further comprising:
   a) erecting a wind turbine tower at the wind turbine erection site;
   b) mounting a nacelle to the top of the tower;
   c) lifting the fully assembled rotor to its position at the tower; and,
   d) mounting the fully assembled rotor to the nacelle.
3. The method of any preceding clause, wherein the hub is mounted to the vessel during mounting of rotor blades.
4. The method of any preceding clause, wherein the hub is mounted to the vessel by a flange.
5. The method of any preceding clause, wherein the rotor blades are held in a horizontal position while being mounted to the hub.
6. The method of any preceding clause, wherein the hub is supported by a crane during the mounting process of the rotor blades.
7. The method of any preceding clause, wherein the rotor blade is supported by a crane during the mounting process.
8. The method of any preceding clause, wherein the fully assembled rotor is tilted from a horizontal position to a vertical position before being mounted to the nacelle.
9. The method of any preceding clause, wherein the fully assembled rotor is lifted by a first crane to its position at the tower, and is tilted during the lifting.
10. The method of any preceding clause, wherein the tilting is carried out by using a second hook on the first crane.
11. The method of any preceding clause, wherein the tilting is carried out by a second crane.
12. The method of any preceding clause, wherein a rotor is transported to the erection site with the predetermined number of rotor blades mounted to the hub except at least one rotor blade, which is mounted after arriving at the erection site.
13. The method of any preceding clause, wherein a rotor is transported to the erection site with the predetermined number of rotor blades mounted to the hub except two rotor blades.
14. The method of any preceding clause, wherein a rotor is transported to the erection site without any rotor blades mounted to the hub.
15. The method of any preceding clause, wherein the at least one rotor blade is supported by a support during mounting on the vessel.
16. A method for erecting an offshore wind turbine at a wind turbine erection site, wherein the wind turbine includes a rotor, which has, in a fully assembled condition, a predetermined number of rotor blades mounted to a rotor hub, the method comprising:
   a) transporting the rotor to the erection site, which has a smaller number than the predetermined number of rotor blades mounted to the rotor hub;
   b) transporting rotor blades to the erection site; and,
   c) mounting, on a vessel, the rotor by assembling rotor blades to the rotor hub so that the rotor is in the fully assembled condition.
17. The method of any preceding clause, further comprising:
   a) erecting a wind turbine tower at the wind turbine erection site;
   b) mounting a nacelle to the top of the tower;
   c) lifting the fully assembled rotor to its position at the tower; and,
   d) mounting the rotor to the nacelle.
18. The method of any preceding clause, wherein the hub is mounted to the vessel during mounting of rotor blades.
19. The method of any preceding clause, wherein the hub is supported by a crane during mounting of rotor blades.
20. A vessel, comprising:
   a) a vessel deck;
   b) space for mounting a wind turbine rotor on the deck; and
   c) at least one flange for mounting a wind turbine rotor hub to the deck.

## Claims

1. A method for erecting an offshore wind turbine (10) at a wind turbine erection site, wherein the wind turbine (10) includes a rotor (18), which has, in a fully assembled condition, a predetermined number of rotor blades (22) mounted to a rotor hub (20), the method comprising:
transporting the rotor hub (20) to the erection site;
transporting rotor blades (22) to the erection site; and
mounting, on a vessel (120), rotor blades (22) to the rotor hub (20) so that the rotor (18) is in the fully assembled condition.

2. The method of claim 1, further comprising:
erecting a wind turbine tower (12) at the wind turbine erection site;
mounting a nacelle (16) to the top of the tower (12);
lifting the fully assembled rotor (18) to its position at the tower (12); and
mounting the fully assembled rotor (18) to the nacelle (16).

3. The method of claim 1 or claim 2, wherein the hub (20) is mounted to a flange during mounting of the rotor blades (22).

4. The method of any of claims 1 to 3, wherein the rotor blades (22) are held in a horizontal position while being mounted to the hub (20).

5. The method of any of claims 1 to 4, wherein the fully assembled rotor (18) is tilted from a horizontal position to a vertical position before being mounted to the nacelle (16).

6. The method of any preceding claim, wherein the hub (20) is supported by a first crane (130) during mounting of the rotor (18), and at least one rotor blade (22) is supported by a second crane (140).

7. The method of any preceding claim, wherein the second crane (140) is smaller than the first crane (130).

8. The method of any preceding claim, wherein a rotor (18) is transported to the erection site with the predetermined number of rotor blades (22) mounted to the hub (20) except one to three rotor blades, which are mounted after arriving at the erection site.

9. The method of any preceding claim, wherein the at least one rotor blade (22) is supported by a support (52, 54) during mounting on the vessel (120).

10. A vessel (120), comprising:
a vessel deck (126);
space for mounting a wind turbine rotor (18) on the deck (126); and
a flange for mounting a rotor hub (20).
